# EUROPÄISCHE PATENTSCHRIFT

(11) **EP 1 075 979 B1**
(45) Veröffentlichungstag und Bekanntmachung des Hinweises auf die Patenterteilung: **05.10.2005**
(21) Anmeldenummer: 00114057.3
(22) Anmeldetag: 06.07.2000
(51) Int. Cl.: B60K 35/00

(54) **Verfahren zum Betrieb einer Multifunktionsbedieneinrichtung bei Kraftfahrzeugen, sowie Mulitfunktionsbedieneinrichtung selbst**
Method of operating a multifunction operation device in motor vehicles and multifunction operating device
Procédé pour la mise en oeuvre d'un dispositif de commande multifonctions d'automobile et dispositif de commande multifonctions

(30) Priorität: 07.08.1999 DE 19937463
(43) Veröffentlichungstag der Anmeldung: 14.02.2001
(73) Patentinhaber: Volkswagen Aktiengesellschaft, 38436 Wolfsburg (DE)
(72) Erfinder: Crull, Torsten, 38106 Braunschweig (DE); Böckmann, Ingo Dipl.-Ing., 38551 Ribbesbüttel (DE); Liebig, Eckhard, 38518 Gifhorn (DE)

(56) Entgegenhaltungen:
- EP-A- 0 893 750
- WO-A-98/43261
- DE-A- 19 528 457
- DE-A- 19 608 869
- DE-A- 19 730 297

## Beschreibung

Die Erfindung betrifft ein Verfahren zum Betrieb einer Multifunktionsbedieneinrichtung sowie eine Multifunktionsbedieneinrichtung selbst, eingesetzt bei Kraftfahrzeugen, bei welchem Menüs und/oder Bedienfunktionen auf einer Anzeigeeinheit dargestellt werden und die besagten Funktionen über Tast- und/oder Drehbetätigungselemente betätigt werden.

Verfahren und Verfahrensweisen zum Betrieb einer Multifunktionsbedieneinrichtung in Kraftfahrzeugen sind vielfach bekannt. Es haben sich sogenannte Multifunktionsbedienelemente mit zentraler Anzeigeeinheit zur Anzeige der Bedienfunktionen der einzelnen im Kraftfahrzeug vorhandenen Geräte (Menüs) etabliert. D.h., nicht mehr jedes Einzelgerät, wie Autoradio, Klimaanlage, Bordcomputer etc., haben eigene, für sich separierte Displays sondern im Fahrzeug kommt alles, und somit auch alle Gerätefunktionen, auf einer Anzeigeeinheit zusammen. Hierzu ist es notwendig, daß zunächst das entsprechende Gerät, welches beeinflußt, verstellt, eingeschaltet und dergleichen mehr, werden soll, durch die Betätigung einer entsprechenden Wahltaste auf die Anzeigeeinheit geholt wird. Auf der Anzeigeeinheit erscheinen dann für die jeweilig gewählten Gerätezuweisungen, auch jeweilige Anzeigeaufteilungen, die im übrigen auch in ihrer darstellungsmäßigen Aufmachung eine selbsterklärende Gerätezuweisung haben. So wird die Displayanzeige für das Autoradio eine, entweder dem klassischen Autoradio entsprechende Displayanzeige sein, oder eine Darstellung, die zumindest dem Autoradio assoziativ zuordnenbar ist. Eine entsprechende Displaydarstellung für die Aufschaltung der Klimaanlage oder des Navigationssystems oder dergleichen mehr erfolgt dann ebenfalls in entsprechender Weise. So sind die entsprechend generierten Anzeigen auf dem Display bezüglich der jeweils gewählten Geräte unterscheidbar.

Eine besondere Bedeutung kommt nunmehr der Bedienelementezuordnung für die so auf der Anzeigeeinrichtung generierte Betätigung hinzu. D.h., nicht nur das Display auf der Anzeigeeinrichtung erfährt durch die entsprechende Bedienelementebetätigung eine Zuordnung zum jeweilig nunmehr zu beeinflussenden Gerät, sondern die Bedienelemente müssen ebenfalls funktionszugewiesen werden.

Desweiteren ist es bekannt, daß bei beispielsweise verschiebbaren Schiebeschaltern auf dem Display der Betätigungsweg dargestellt wird. So ist aus der EP 0 796 756 A 2 eine solche Verschiebeschalteranordnung angegeben, bei welcher der Betätigungsweg und die entlang des Betätigungsweges erzielten Funktionen auf dem Bildschirm dargestellt werden. Hinzu kommt eine mechanische Widerstandsbeeinflussung des Verschiebeschalters.

Aus der DE 196 46 226 A 1 ist ebenfalls eine taktile Rückmeldung auf einen Drehgeber angegeben. Bei der dort gezeigten Bedienvorrichtung ist eine Intensitätsänderung der taktilen Rückmeldung vorgesehen, die zu den Anschlägen hin zunimmt, und mit einem um eine Achse drehbaren Betätigungsteil ist das Betätigungsteil am Rande geriffelt und wirkt mit einem Gegenteil zusammen, das in Richtung Drehachse des Betätigungsteiles verschiebbar ist. Auf diese Weise wird der kontinuierliche Drehweg in kleine Rastabschnitte unterteilt.

Aus der DE 38 36 555 A1 ist ein Multifunktionsbedienelement für Kraftfahrzeuge bekannt, welches einen einzigen bidirektionalen Drehschalter mit Raststellungen und axialer Bewegbarkeit vorsieht. Mit Hilfe dieses Drehschalters sind Funktionsgruppen auswählbar und mit Hilfe einer Enterfunktion einzustellen, und anschließend daran innerhalb der jeweiligen Funktionsgruppe die zugehörige Funktion auf dieselbe Weise einstellbar.

Aus der EP 0 771 680 ist eine Bedieneinrichtung im allgemeinen bekannt, bei welcher die Bedienelemente der Bedieneinrichtung mit entsprechend zugeordneten Symbolen zur visuellen Anzeige der Funktionen versehen sind. Zur haptischen Unterscheidung der einzelnen Schalter und der damit gewollten bzw. bezweckten haptischen Unterscheidbarkeit ist eine Orientierungsleiste vorgesehen, mit entsprechend haptisch unterschiedlichen Oberflächen, so daß die Schalter und deren Funktionen blind eingestellt werden, durch reine Tastannäherung.

Aus der DE 195 14 976 A1 ist eine Bedientafel für eine Heizungs- und/oder Klimaanlage eines Kraftfahrzeuges angegeben. Diese bezieht sich auf eine Bedientafel, die eine Frontseite umfaßt, wenigstens ein Bedienorgan, welches durch eine entsprechende Öffnung in der Frontscheibe hindurchgeht und ein Anzeigefeld, das in unmittelbarer Nähe des Bedienorganes vorgesehen ist. Eine Vielzahl von Figuren und sinnbildlichen Darstellungen sind dabei um die Drehschalter herum angeordnet, so daß der Drehschalter bei Erreichen der Symbole entsprechenden Funktionen zugewiesen ist.

Aus der DE 197 30 297 A1 ist eine Bedienvorrichtung mit zweidimensionaler Dialogbewegung bekannt. Diese dient zum Anwählen und Auswählen von Funktionen und Funktionsgruppen, insbesondere zur Anwendung in Kraftfahrzeugen. Hierbei ist vorgesehen, daß durch Drehen eines in einer ersten Axialstellung befindlichen Drehschalters der Dialog in einer ersten Dimension bewegbar ist und daß durch Drehen des in einer zweiten Axialstellung befindlichen Drehschalters der Dialog in einer zweiten Dimension bewegbar ist. Dabei sind mit einem weiteren Schalter die angewählten Funktionen oder Funktionsgruppen auswählbar und die angewählten Funktionen werden zurückgemeldet. Hierbei handelt es sich im wesentlichen um einen mehrdimensionalen Drehschalter, mit welchem in verschiedenen drucktastbaren Ebenen unterschiedliche Funktionen anwählbar sind.

Aus der DE 196 38 015 A1 ist des Weiteren ein Verfahren zur Erzeugung von haptischen Markierungen auf einer Eingabefläche und eine Anordnung zur Durchführung des Verfahrens angegeben. Um einen geringen technischen Aufwand und eine große Vielfalt von haptischen Markierungen auf einer Eingabefläche zu erzeugen, wird die Position eines Eingabeorgans auf der Eingabeoberfläche detektiert, wobei die so detektierten Positionen mit einem virtuell koordinatenorientierten Referenzmuster verglichen werden. Dabei wird jeder Position eine definierte Bewegung zugeordnet, in Abhängigkeit von der Position des Eingabeorganes. Diese Anordnung eignet sich insbesondere für sogenannte Touchscreens, auf denen Schaltelemente symbolisiert generiert werden.

Aus der DE 195 28 457 A1 ist eine Bedieneinrichtung mit einem Hemmelement für ein drehbetätigbares Schaltelement bekannt, um entlang eines quasikontinuierlichen Betätigungsweges den haptischen Eindruck aneinandergereihter Raststellungen zu geben.

Die DE 196 48 869 A1, die alle Merkmale der Oberbegriffe der Ansprüche 1 (Verfahren) und 6 (Einrichtung) offenbart, offenbart ein Bediengerät, welches eine Sprachbedieneinrichtung und ein Betätigungsmittel umfasst, wobei dem Betätigungsmittel durch die Sprachbedieneinrichtung verschiedene Bedienfunktionen zugewiesen werden. Erfindungsgemäß verfügt das Betätigungsmittel über mehrere Verstellfreiheitsgrade und Arten einer haptischen Rückmeldung, welche in Abhängigkeit von der zugewiesenen Bedienfunktion einstellbar sind.

Die EP 0 893 750 A1 offenbart eine Multifunktions-Bedieneinrichtung mit einem bidirektional drehbaren und axial bewegbaren Schaltglied zur Auswahl eines Menüs aus mehreren Menüs und/oder einer von mehreren Funktionen eines Menüs und/oder eines Soll-Funktionswerts für eine Funktion, wobei das Schaltglied in zwei zueinander senkrechten Ebenen schwenkbar gelagert ist.

Die WO 98/43261 A1 offenbart ein Bedienelement mit einer variabel und selektiv aktivierbaren Rückkopplungseinheit.

Es ist Aufgabe der Erfindung, eine verbesserte Multifunktionsbedieneinrichtung anzugeben.

Vorgenannte Aufgabe wird durch ein Verfahren zum Betrieb einer Multifunktionsbedieneinrichtung gelöst, bei welchem Menüs und/oder Bedienfunktionen auf mindestens einer Anzeigeeinrichtung dargestellt werden, und die besagten Menüs und/oder Funktionen über ein Tastelement und/oder mindestens ein Drehbetätigungselement (20) betätigt werden, wobei das oder die Drehbetätigungselement bzw. -elemente (20) hinsichtlich Drehrichtungen und Drehstellungen und/oder Raststellungen und/oder Betätigungsanschlägen frei programmierbar ist bzw. sind, derart, dass haptische Rückmeldungen im Drehbetätigungsweg erzeugt werden, die den jeweils abgerufenen Menüs oder Funktionen zugeordnet sind, und wobei jeder Betätigungsfunktionszuordnung ein Satz haptischer Daten zugeordnet ist, die dynamisch an eine Funktionsdatenänderung angepasst werden.

Weitere vorteilhafte Ausgestaltungen des erfindungsgemäßen Verfahrens sind in den abhängigen Ansprüchen 2 bis 5 angegeben.

So ist in vorteilhafter Ausgestaltung vorgesehen, dass die Voreinstellungen und die darauf gespeicherten haptischen Daten historiebezogen generiert werden. Bei Wiederaufruf der Betätigungszuordnung werden Raststellungen, Drehrichtungen, Anschläge etc. wie bei zuletzter Betätigung der zugeordneten Menüs oder Funktionen voreingestellt, abgerufen und wieder eingestellt. D.h., wenn das Menü oder die jeweilige Funktion auf das Multifunktionsbedienelement projiziert wird, dann werden durch hier nicht weiter dargestellte Hemmungselemente im Drehgeber bzw. im Drehbetätigungselement entsprechende haptische Rückmeldungen in Form von Widerstandserhöhungen oder fühlbaren Einrastungen jeweils funktionsbezogen vergeben. D.h., wenn zwischen Menüs oder Funktionen hin und her geschaltet wird, so werden auf bzw. in dem Drehbetätigungselement auch immer wieder andere haptische Rückmeldungen, die entsprechend gerätebezogen sind, erzeugt.

In weiterer vorteilhafter Ausgestaltung ist vorgesehen, dass die haptischen Einstellungen von Drehrichtungen, Raststellungen, Anschlägen usw. frei programmierbar und speicherbar sind. Dies ist dann die Realisierung der oben benannten Multifunktion des Bedienelementes.

In weiterer vorteilhafter Ausgestaltung ist vorgesehen, dass Raststellungen, Anschläge etc. auf der Anzeigeeinrichtung angezeigt werden können, beispielsweise durch farbliche oder symbolische Markierung, entlang des Drehbetätigungsweges.

Vorgenannte Aufgabe wird zudem durch eine Multifunktionsbedieneinrichtung gelöst, bei welcher Menüs und/oder Bedienfunktionen auf mindestens einer gemeinsamen Anzeigeeinrichtung darstellbar sind, und die besagten Menüs und/oder Funktionen über Tastelemente und/oder mindestens ein Drehbetätigungselement betätigbar sind, wobei ein Drehbetätigungselement vorgesehen ist, welches hinsichtlich Drehrichtungen und Drehstellungen und/oder Raststellungen und/oder Betätigungsanschlägen haptisch rückmeldend variabel programmierbar ist, derart, dass besagte haptische Rückmeldungen als Hemmungen, Widerstandserhöhungen oder dergleichen im Drehbetätigungsweg erzeugbar sind, die den jeweils abgerufenen Bewegungsfunktionen zugeordnet abspeicherbar und abrufbar sind, und wobei jeder Betätigungsfunktionszuordnung ein Satz haptischer Daten zugeordnet ist, die dynamisch an eine Funktionsdatenänderung anpassbar sind.

Weitere vorteilhafte Ausgestaltungen der erfindungsgemäßen Einrichtungen sind in den übrigen abhängigen Ansprüchen 7 und 8 angegeben.

Dabei sind in vorteilhafter Ausgestaltung der erfindungsgemäßen Einrichtung ein oder mehrere Speicherelemente zur Abspeicherung und Zuordnung der Wahltasten zu den besagten Gerätefunktionen vorgesehen. Die Wahltasten rufen dabei nicht nur die entsprechende Gerätezuweisung auf, sondern mit der entsprechenden Wahltastenbetätigung erfolgt auch eine zugeordnete Abrufung der entsprechend auf den Drehgeber zu projezierende Historie oder der frei programmierten haptischen Daten.

Die Erfindung ist in der Zeichnung dargestellt und nachfolgend näher beschrieben.

Es zeigt:
Figur 1
   Multifunktionsbedienelement.
Figur 2
   Drehgeber mit angedeuteten haptischen Funktionen.

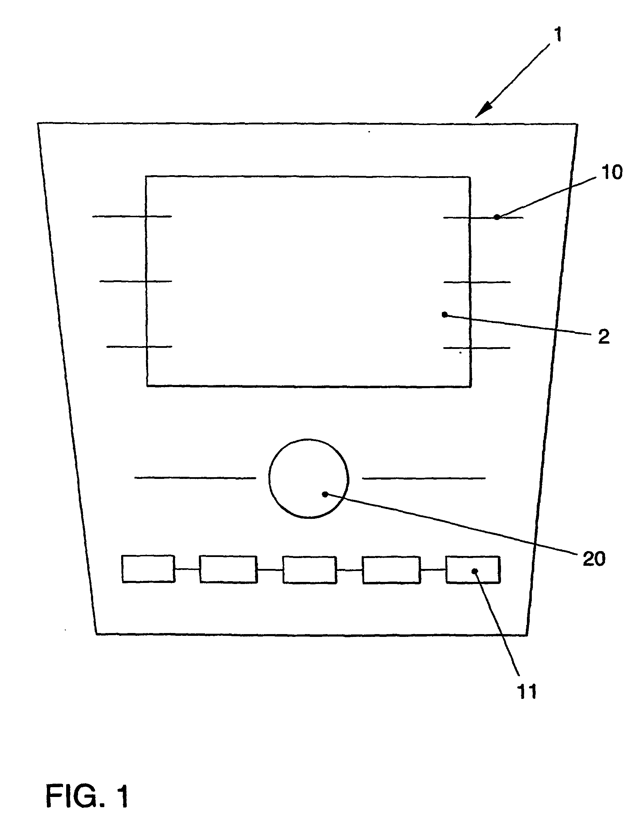

Figur 1 zeigt eine Multifunktionsbedieneinrichtung 1, auf welchem Tasten 10 angeordnet sind, sowie einen Bildschirm 2. Die Tasten 10 sind um den Bildschirm 2 herum verteilt und sind entsprechend plazierten Schaltsymbolen auf dem Bildschirm zugeordnet.

Desweiteren sind auf der Multifunktionsbedieneinrichtung 1 Menütasten 11 vorgesehen, mit Hilfe derer einzelne Gerätefunktionszuweisungen, wie beispielsweise Radio, Navigationssysteme, Telefon usw. zuweisbar bzw auswählbar sind. Ebenfalls weist die Multifunktionsbedieneinrichtung 1 einen bidirektionaler Druckdrehgeber 20 plaziert, mit welchem multifunktional Menüs, Funktionen oder Zustände der zugewiesenen Gerätefunktionen kontinuierlich oder quasi- kontinuierlich veränderbar sind, wobei über die Drehbewegung des Druckdrehgebers 20 eine Auswahl der Menüs, Funktionen und/oder Zustande und über die axiale Bewegung eine Auswahl des gewählten Menüs, der Funktion oder des Parameters erfolgt. Hierzu können beim Radio die Lautstärke, die Senderwahl, oder bei der Wiedergabe von Audioträgern, die Titelwahl, die Tonträgerwahl und dergleichen mehr gewählt bzw verändert werden. Diese entsprechenden Funktionen werden zunächst über die Wahltasten 11 gerätebezogen abgerufen und auf dem Display 2 angezeigt bzw. generiert.

Gleichzeitig werden durch die Wahltastenbetätigung 11 die entsprechenden haptischen Daten bzw. haptischen Funktionen dem Druckdrehgeber 20 zugewiesen bzw abgerufen. D.h., wenn beispielsweise über eine entsprechende Wahltaste 11 die Betätigung der Heizung aufgerufen wird, so wird ein entsprechendes Anzeigefeld auf dem Bildschirm 2 dargestellt, welches auch dem Druckdrehgeber 20 einen gewissen Verstellbereich in Form eines zugelassenen Drehwinkels ermöglicht. D.h., dem Druckdrehgeber werden Anschläge vorgegeben, daß dieser nicht endlos gedreht werden soll. Die Anschläge können definiert werden durch ad hoc über hier nicht weiter dargestellte Hemmungselemente eingestellte und freiprogrammierbare mechanische Anschläge oder durch eine Erhöhung des Drehwiderstandes im Anschlagbereich.

Darüber hinaus wird die zuletzt eingestellte Temperatur der Klimaanlage bzw. der Heizung angezeigt und auf diesem Punkt befindet sich der Druckdrehgeber 20 nun automatisch. Von dort aus kann dann die entsprechende Drehposition in Richtung kalt oder warm verändert werden. Die Drehrichtungen in Richtung kalt oder warm können dabei auch noch mit Hilfe eines sich ändernden Drehwiderstandes als Funktion des Drehwinkels dargestellt werden.

Eine solche entsprechende Gerätefunktionszuweisung auf den Druckdrehgeber 20 erfolgt dabei bei jeder hinterlegten Wahltastenfunktion. Hierbei werden die besagten Anschläge oder Raststellungen oder dergleichen mehr gleichzeitig abgerufen und dem Druckdrehgeber mechanisch fühlbar, aber elektrisch gestellt und somit elektronisch beeinflußbar, zugewiesen.

Außerdem kann vorgesehen sein, daß sich die haptischen Daten des Druckdrehgebers 20 dynmaisch selbst korrigieren, wenn beispielsweise Radiosender verschwinden, weil das Sendegebiet verlassen wird, oder Verkehrsmeldungen, die nicht mehr aktuell sind, aus einer Auswahlliste verschwinden.

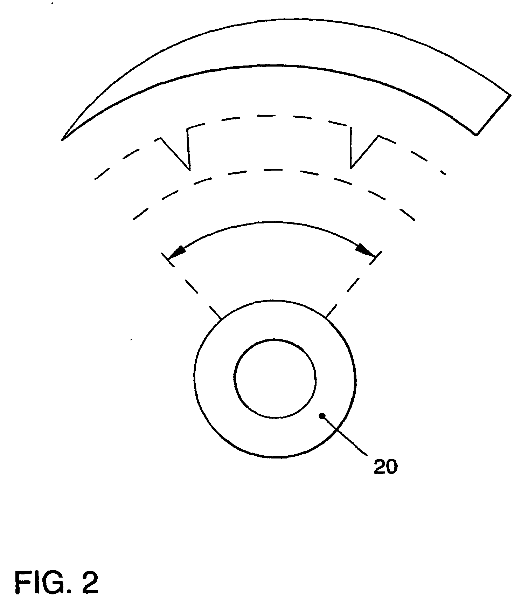

Figur 2 zeigt einen Druckdrehgeber 20 mit der Darstellung verschiedener gedachter haptischer Beeinflussungen oder Rückmeldungen. So können beispielsweise freidefinierbare Anschläge definiert werden, die durch die hier nicht weiter dargestellten Hemmelemente im Druckdrehgeber 20 an den entsprechenden freiprogrammierbaren Positionen erzeugt werden. Weitergehend können Rastunterteilungen quasi kontinuierlich erfolgen, was mit der darüberliegenden Strichlinie gemeint ist. Hierbei können kleine fühlbare Einrastungen darstellen, daß sich eine Veränderung durch eine Drehbetätigung in vorgegebenen Schrittweiten ergibt. Die darüberliegende Linie hat eine quasi-kontinuierliche Rastunterteilung, wie die eben beschriebene, jedoch sind diskrete hervorgehobene Raststufen haptisch spürbar angeordnet. Diese Raststufen verrasten mit einer höheren mechanischen Widerstandserzeugung oder Überwindung, so daß der Bediener, ohne auf das Display sehen zu müssen, die Raststellung bei der Drehbetätigung spüren kann. Darüberliegend ist mit dem sich verbreitenden Balken entlang des Betätigungsweges gemeint, daß es zu einer einseitigen richtungsbezogenen Erhöhung des Widerstandes in Abhängigkeit des jeweils eingestellten Winkels oder Drehbetätigungswinkels kommt. Mit Hilfe einer solchen Widerstandserhöhung entlang des Betätigungsweges können Drehrichtungen markiert werden, die bevorzugt oder zugelassen werden. Eine Betätigung entlang abnehmender Balkenbreite bedeutet also eine Verminderung des Drehwiderstandes in Abhängigkeit zum Drehbetätigungswinkel, und in der entgegengesetzten Richtung eine Erhöhung desselben.

Die Erfindung ist verfahrensmäßig erheblich vorteilhaft und läßt sich einrichtungsmäßig leicht realisieren. Sie dient zur Erhöhung der leichteren Bedienbarkeit eines Multifunktionsbedienelementes. Bei Multifunktionsbedienelementen ist im übrigen auch die Problematik zu überwinden, daß durch die bewußte Wahl nur noch eines Displays für eine Reihe von Geräten, die entsprechenden Betätigungszuweisungen der Tasten und des Druckdrehgebers logisch gut aufgebaut und selbsterklärend sein müssen, um nicht die Aufmerksamkeit des Fahrzeugführers über Gebühr zu beanspruchen.

## Patentansprüche

1. Verfahren zum Betrieb einer Multifunktionsbedieneinrichtung (1), bei welchem Menüs und/oder Bedienfunktionen auf mindestens einer Anzeigeeinrichtung (2) dargestellt werden, und die besagten Menüs und/oder Funktionen über Tastelemente (10, 11) und/oder mindestens ein Drehbetätigungselement (20) betätigt werden,
**dadurch gekennzeichnet,**
**daß** das oder die Drehbetätigungselement bzw. -elemente (20) hinsichtlich Drehrichtungen und Drehstellungen und/oder Raststellungen und/oder Betätigungsanschlägen frei programmierbar ist bzw. sind, derart, daß haptische Rückmeldungen im Drehbetätigungsweg erzeugt werden, die den jeweils abgerufenen Menüs oder Funktionen zugeordnet sind, wobei jeder Betätigungsfunktionszuordnung ein Satz haptischer Daten zugeordnet ist, die dynamisch an eine Funktionsdatenänderung angepasst werden.

2. Verfahren nach Anspruch 1,
**dadurch gekennzeichnet,**
**daß** aufgrund haptischer Daten, die Grenzwerte, Voreinstellungen usw. zugeordnet sind bzw. werden und daß entsprechende Raststellungen, Drehwiderstandserhöhungen etc. generiert werden, die besagten Grenzwerten, Voreinstellungen etc. entsprechen.

3. Verfahren nach Anspruch 1 oder 2
**dadurch gekennzeichnet,**
**daß** die Voreinstellungen und die darauf gespeicherten haptischen Daten historiebezogen generiert und bei Wiederaufruf der Betätigungszuordnung historiebezogen, also welche Raststellungen, Drehstellungen, Drehrichtungen, Anschläge etc. waren bei letzter Betätigung der zugeordneten Gerätefunktion voreingestellt, abgerufen und wiedereingestellt werden.

4. Verfahren nach einem der vorhergehenden Ansprüche,
**dadurch gekennzeichnet,**
**daß** die haptischen Einstellungen von Drehrichtung, Raststellung, Anschlägen usw. frei programmierbar und abspeicherbar sind.

5. Verfahren nach einem der vorhergehenden Ansprüche,
**dadurch gekennzeichnet,**
**daß** Raststellungen, Anschläge etc. auf der Anzeigeeinrichtung (2) angezeigt werden, beispielsweise durch farbliche oder symbolische Markierungen.

6. Multifunktionsbedieneinrichtung, bei welcher Menüs und/oder Bedienfunktionen auf mindestens einer gemeinsamen Anzeigeeinrichtung (2) darstellbar sind, und die besagten Menüs und/oder Funktionen über Tastelemente (10, 11) und/oder mindestens ein Drehbetätigungselement (20) betätigbar sind,
**dadurch gekennzeichnet,**
**daß** ein Drehbetätigungselement (20) vorgesehen ist, welches hinsichtlich Drehrichtungen und Drehstellungen und/oder Raststellungen und/oder Betätigungsanschlägen haptisch rückmeldend variabel programmierbar ist, derart, daß besagte haptische Rückmeldungen als Hemmungen, Widerstandserhöhungen oder dergleichen im Drehbetätigungsweg erzeugbar sind, die den jeweils abgerufenen Bewegungsfunktionen zugeordnet abspeicherbar und abrufbar sind, wobei jeder Betätigungsfunktionszuordnung ein Satz haptischer Daten zugeordnet ist, die dynamsich an eine Funktionsdatenänderung anpassbar sind.

7. Multifunktionsbedieneinrichtung nach Anspruch 6,
**dadurch gekennzeichnet,**
**daß** das Drehbetätigungselement (20) in unmittelbarer Nähe zur Anzeigeeinrichtung (2) angeordnet ist.

8. Multifunktionsbedieneinrichtung nach Anspruch 6 oder 7,
**dadurch gekennzeichnet,**
**daß** eins oder mehrere Hemmelemente dem jeweiligen Drehbetätigungselement (20) zugeordnet sind, über welche die besagten haptischen Rückmeldungen mechanisch umsetzbar sind.

## Claims

1. Method for operating a multifunctional control device (1) in which menus and/or control functions are shown on at least one display device (2) and said menus and/or functions are operated using key elements (10, 11) and/or at least one rotary operating element (20),
**characterized**
**in that** the rotary operating element or elements (20) is or are freely programmable in terms of directions of rotation and rotary positions and/or latch positions and/or operating stops such that haptic reports are produced in the path of rotary operation which are associated with the respectively retrieved menus or functions, each operating function association having an associated set of haptic data which are dynamically matched to a change of functional data.

2. Method according to Claim 1,
**characterized**
**in that** haptic data form the basis of the association or allocation of the limit values, presets etc. and in that corresponding latch positions, increases in rotary resistance etc. are generated which correspond to said limit values, presets etc.

3. Method according to Claim 1 or 2,
**characterized**
**in that** the presets and the haptic data stored thereon are generated on a historical basis and, when the operating association is called again, are retrieved and reset on a historical basis, that is to say which latch positions, rotary positions, directions of rotation, stops etc. were set when the associated appliance function was last operated.

4. Method according to one of the preceding claims,
**characterized**
**in that** the haptic settings for direction of rotation, latch setting, stops etc. are freely programmable and storable.

5. Method according to one of the preceding claims,
**characterized**
**in that** latch settings, stops etc. are displayed on the display device (2), for example using coloured or symbolic markers.

6. Multifunctional control device in which menus and/or control functions can be shown on at least one common display device (2) and said menus and/or functions can be operated using key elements (10, 11) and/or at least one rotary operating element (20),
**characterized**
**in that** a rotary operating element (20) is provided which is variably programmable, on the basis of haptic reports, in terms of directions of rotation and rotary positions and/or latch positions and/or operating stops such that said haptic reports can be produced as restraints, increases in resistance or the like in the path of rotary operation which are able to be stored and retrieved in association with the respectively retrieved motion functions, each operating function association having an associated set of haptic data which can be dynamically matched to a change of functional data.

7. Multifunctional control device according to Claim 6,
**characterized**
**in that** the rotary operating element (20) is arranged in direct proximity to the display device (2).

8. Multifunctional control device according to Claim 6 or 7,
**characterized**
**in that** one or more restraining elements are associated with the respective rotary operating element (20) and can be used for mechanically converting said haptic reports.

## Revendications

1. Procédé pour le fonctionnement d'un dispositif de commande multifonction (1), dans lequel des menus et/ou des fonctions de commande sont représentés sur au moins un dispositif d'affichage (2), et lesdits menus et/ou fonctions sont activés par le biais d'éléments tactiles (10, 11) et/ou au moins d'un élément d'activation rotatif (20),
**caractérisé en ce que**
le ou les éléments d'activation rotatifs (20) sont librement programmables en termes de sens de rotation et de positions de rotation et/ou de positions d'encliquetage et/ou de butées d'activation, de telle sorte que des informations tactiles en retour soient produites dans le chemin d'activation en rotation, lesquelles sont associées aux menus ou fonctions respectivement appelés, un jeu de données tactiles étant associé à chaque affectation de fonction d'activation, lesquelles données étant adaptées de manière dynamique à une variation de données de fonctions.

2. Procédé selon la revendication 1,
**caractérisé en ce que**
les valeurs limites, préajustages etc. sont affectés sur la base des données tactiles et **en ce que** des positions d'encliquetage, augmentations de la résistance de rotation, etc., correspondantes sont produites, lesquelles correspondent auxdites valeurs limites, auxdits préajustages, etc.

3. Procédé selon la revendication 1 ou 2,
**caractérisé en ce que**
les préajustages et les données tactiles mémorisées sur ceux-ci sont produits en fonction de l'historique et sont appelés et réajustés lors du rappel de l'affectation de l'activation par rapport à l'historique, c'est-à-dire quelles positions d'encliquetage, positions de rotation, quels sens de rotation, butées, etc. étaient préajustés au cours de la dernière activation de la fonction d'appareil associée.

4. Procédé selon l'une quelconque des revendications précédentes,
**caractérisé en ce que**
les ajustages tactiles du sens de rotation, de la position d'encliquetage, des butées etc., peuvent être librement programmables et mémorisables.

5. Procédé selon l'une quelconque des revendications précédentes,
**caractérisé en ce que**
les positions d'encliquetage, les butées, etc., sont indiquées sur le dispositif d'affichage (2), par exemple par des marquages colorés ou symboliques.

6. Dispositif de commande multifonction, dans lequel des menus et/ou des fonctions de commande peuvent être représentés sur au moins un dispositif d'affichage commun (2), et lesdits menus et/ou fonctions peuvent être activés par le biais d'éléments tactiles (10, 11) et/ou au moins d'un élément d'activation rotatif (20),
**caractérisé en ce que**
l'on prévoit un élément d'activation rotatif (20) qui est programmable de manière variable en terme de sens de rotation et de positions de rotation et/ou de positions d'encliquetage et/ou de butées d'activation avec des informations tactiles en retour, de telle sorte que lesdites informations tactiles en retour puissent être produites sous forme de blocages, augmentations de la résistance ou similaires, dans le chemin d'activation de rotation, et puissent être mémorisées et appelées de manière associée aux fonctions de déplacement respectives appelées, un jeu de données tactiles étant associé à chaque affectation de fonction d'activation, lesquelles données pouvant être adaptées de manière dynamique à une variation des données de fonctions.

7. Dispositif de commande multifonction selon la revendication 6,
**caractérisé en ce que**
l'élément d'activation de rotation (20) est disposé à proximité immédiate du dispositif d'affichage (2).

8. Dispositif de commande multifonction selon la revendication 6 ou 7,
**caractérisé en ce que**
un ou plusieurs éléments de blocage sont associés à l'élément d'activation de rotation respectif (20), par le biais desquels lesdites informations tactiles en retour peuvent être converties mécaniquement.
